# EUROPEAN PATENT APPLICATION

(11) **EP 4 764 256 A1**
(43) Date of publication of application: **24.06.2026**
(21) Application number: 24222971.4
(22) Date of filing: 23.12.2024
(51) Int. Cl.: F16H 57/04

(54) **A DRAINAGE PIPE SYSTEM AND A METHOD FOR GENERATING SUCTION PRESSURE FROM A MOVING FLUID**

(71) Applicant: Volvo Truck Corporation, 405 08 Göteborg (SE)
(72) Inventor: HAGERMAN, Henrik, 417 24 Göteborg (SE)
(74) Representative: Zacco Sweden AB

(57) **Abstract**

A drainage pipe system for generating suction pressure from a moving fluid, the drainage pipe system comprising: a main drainage pipe; and an outlet section comprising an extension pipe that transitions into an open-sided outlet channel, wherein the extension pipe is sized to fit either internally or externally with respect to the main drainage pipe, thereby enabling the outlet section to extend and retract along the main drainage pipe's surface, and wherein the open-sided outlet channel is configured to be positioned with its open side facing an external mating surface, thereby generating suction pressure at the outlet of the main drainage pipe as the moving fluid is directed through the outlet channel.

## Description

### TECHNICAL FIELD

The disclosure relates generally to drainage pipe systems. In particular aspects, the disclosure relates to a drainage pipe system and a method for generating suction pressure from a moving fluid. The disclosure can be applied to shared oil systems in heavy-duty electromobility applications, including trucks, buses, and construction equipment, among other vehicle types. Although the disclosure may be described in part with respect to vehicle applications, it is not restricted to vehicles and can be applied to a broad range of drainage applications across various settings.

### BACKGROUND

In electromobility powertrains, electric machines may require a substantial amount of oil flow to cool the end windings to cope with high power requirements from the vehicle application, or the electric machines may be entirely oil cooled. An effective way to accomplish this is by using oil from the transmission oil sump, but this necessitates returning the oil after it has passed through the electric machine. The placement of the return outlet at the bottom of the electric machine may introduce challenges as it is directly connected to the transmission oil sump. In particular changes in road inclination affect the oil sump level in the electric machine, risking partial submersion of the electric machine rotors and resulting in unacceptable losses and excessive heat generation.

Hence, there is a need for an improved system to efficiently manage oil return in electric machines with low outlets positioned near the transmission oil sump level, ensuring robust operation and efficiency even under varying road inclinations.

### SUMMARY

According to a first aspect of the disclosure, a drainage pipe system for generating suction pressure from a moving fluid is disclosed. The drainage pipe system comprises: a main drainage pipe and an outlet section. The outlet section comprises an extension pipe that transitions into an open-sided outlet channel, wherein the extension pipe is sized to fit either internally or externally with respect to the main drainage pipe, thereby enabling the outlet section to extend and retract along the main drainage pipe's surface, and wherein the open-sided outlet channel is configured to be positioned with its open side facing an external mating surface, thereby generating suction pressure at the outlet of the main drainage pipe as the moving fluid is directed through the outlet channel. The first aspect of the disclosure may seek to ensure drainage by utilizing the flow of a moving fluid. A technical benefit may include that the outlet section can automatically extend when suction pressure increases, allowing it to move closer to the external mating surface.

Optionally in some examples, including in at least one preferred example, the drainage pipe system further comprises an extension-retraction mechanism configured to extend the outlet section along the main drainage pipe's surface as suction pressure increases, and to retract the outlet section to a fully retracted position as the suction pressure ceases. A technical benefit may include the ability to adjust the outlet section dynamically based on suction pressure. The retraction also improves flow through the main drainage pipe when suction pressure ceases by increasing the space between the outlet section and the mating surface.

Optionally in some examples, including in at least one preferred example, the main drainage pipe and the extension pipe include one or more openings that align as the outlet section is fully retracted and close as the outlet section extends. A technical benefit may include improving flow through the main drainage pipe when suction pressure ceases by increasing the cross-sectional area of the outlet of the main drainage pipe.

Optionally in some examples, including in at least one preferred example, the main drainage pipe comprises a stop to prevent the outlet section from detaching from the main drainage pipe. A technical benefit may include reducing the risk of overextension or damage to the drainage system.

Optionally in some examples, including in at least one preferred example, the open-sided outlet channel is Venturi-shaped. A technical benefit may include increased suction pressure as fluid velocity accelerates within the Venturi-shaped outlet section.

Optionally in some examples, including in at least one preferred example, the open-sided outlet channel is a flat plate. Alternatively, the open-sided outlet channel is rectangular in shape. A technical benefit may include simplified production of the outlet section and reduced material usage.

Optionally in some examples, including in at least one preferred example, the open-sided outlet channel comprises at least one of the following: inner walls at the channel inlet configured to concentrate the incoming flow; and inner walls at the channel outlet configured to diffuse the outgoing flow. A technical benefit may include increased suction pressure as fluid velocity accelerates within the outlet section.

Optionally in some examples, including in at least one preferred example, the extension-retraction mechanism comprises a spring-loaded mechanism configured to retract the outlet section back to fully retracted position as suction pressure ceases. A technical benefit may include increased operational reliability, as the spring-loaded mechanism ensures quick and automatic retraction without needing additional energy input.

Optionally in some examples, including in at least one preferred example, the extension-retraction mechanism comprises permanent magnets or electromagnets to control the extension and retraction of the outlet section. A technical benefit may include reduced maintenance demands, as magnetic systems have fewer moving parts that can degrade or fail.

Optionally in some examples, including in at least one preferred example, the extension-retraction mechanism further comprises an actuator, which may be electric, hydraulic, or pneumatic, to control the extension and retraction of the outlet section. A technical benefit may include enhanced precision in controlling the extension and retraction of the outlet section, thereby enabling more accurate management of suction pressure.

Optionally in some examples, including in at least one preferred example, the extension-retraction mechanism is configured to control the distance between the open-sided outlet channel and the external mating surface, thereby enabling control of the flow through the channel and, consequently, control of the suction pressure at the outlet of the main drainage pipe 101. A technical benefit may include precise adjustment of suction pressure.

According to a second aspect of the disclosure, a shared oil system for providing oil to a plurality of subsystems for lubrication and cooling is disclosed. The shared oil system comprises: a first subsystem comprising an oil sump; a second subsystem configured to receive oil from the oil sump of the first subsystem; an oil pump configured to draw oil from the oil sump of the first subsystem and deliver the oil to the second subsystem; and a drainage pipe system, according to any of the examples of the first aspect, configured to drain oil from the second subsystem and return to the oil sump of the first subsystem, wherein the main drainage pipe connects the second subsystem to the first subsystem, the mating surface is a gear wheel of the first subsystem, and the oil flow generated by the gear wheel's rotation is directed through the open-sided outlet channel, thereby generating suction pressure at the outlet of the main drainage pipe. The second aspect of the disclosure may seek to improve drainage within a shared oil system. A technical benefit may include improved oil drainage when the shared oil system is inclined with respect to gravity.

Optionally in some examples, including in at least one preferred example, the first subsystem is a transmission of a vehicle, and the second subsystem is an electric machine of a vehicle. A technical benefit may include improved oil drainage for the electric machine across varying road inclinations.

According to a third aspect of the disclosure, a method for generating suction pressure in a drainage pipe system from a moving fluid is disclosed. The drainage pipe system may be implemented according to any of the examples of the first aspect. The method comprises: positioning the main drainage pipe such that the inlet of the main drainage pipe is positioned to access the fluid to be drained; configuring the outlet section such that the extension pipe can extend and retract along the surface of the main drainage pipe; draining the fluid by positioning the open side of the open-sided outlet channel toward an external mating surface and aligning the open-sided outlet channel such that a flow of the moving fluid is directed through the channel, thereby creating suction pressure generated by the flow inside the channel. The third aspect of the disclosure may seek to ensure drainage by utilizing the flow of a moving fluid. A technical benefit may include that the outlet section can automatically extend when suction pressure increases, allowing it to move closer to the external mating surface.

Optionally in some examples, including in at least one preferred example, the open-sided outlet channel is Venturi-shaped. A technical benefit may include increased suction pressure as fluid velocity accelerates within the Venturi-shaped outlet section.

Optionally in some examples, including in at least one preferred example, the open-sided outlet channel is a flat plate. Alternatively, the open-sided outlet channel is rectangular in shape. A technical benefit may include simplified production of the outlet section and reduced material usage.

Optionally in some examples, including in at least one preferred example, the open-sided outlet channel comprises at least one of the following: inner walls at the channel inlet configured to concentrate the incoming flow; and inner walls at the channel outlet configured to diffuse the outgoing flow. A technical benefit may include increased suction pressure as fluid velocity accelerates within the outlet section.

Optionally in some examples, including in at least one preferred example, the drainage pipe system further comprises an extension-retraction mechanism, and the method further comprises: retracting the outlet section to a fully retracted position when the suction pressure ceases. A technical benefit may include the ability to adjust the outlet section dynamically based on suction pressure. Retracting also improves flow through the main drainage pipe when suction pressure ceases by increasing the space between the outlet section and the mating surface.

Optionally in some examples, including in at least one preferred example, the main drainage pipe and the extension pipe include one or more openings that align as the outlet section is fully retracted, and the method further comprises: draining fluid from the main drainage pipe through the aligned openings of the main drainage pipe and the extension pipe. A technical benefit may include improving flow through the main drainage pipe when suction pressure ceases by increasing the cross-sectional area of the outlet of the main drainage pipe.

Optionally in some examples, including in at least one preferred example, positioning the open-sided outlet channel further comprises controlling the distance between the open-sided outlet channel and the external mating surface, thereby enabling control of the flow through the channel and, consequently, control of the suction pressure at the outlet of the main drainage pipe. A technical benefit may include enhanced precision in controlling the extension and retraction of the outlet section, thereby enabling more accurate management of suction pressure by controlling the distance to the external mating surface.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1A illustrates an example of a drainage pipe system comprising a main drainage pipe and an outlet section with a Venturi-shaped outlet channel in a retracted position.
FIG. 1B schematically illustrates an example of a drainage pipe system comprising a main drainage pipe and an outlet section with a Venturi-shaped outlet channel in an extended position.
FIG. 2A schematically illustrates an example of a drainage pipe system comprising a main drainage pipe and an outlet section with a flat outlet channel in a retracted position.
FIG. 2B schematically illustrates an example of a drainage pipe system comprising a main drainage pipe and an outlet section with a flat outlet channel in an extended position.
FIGS. 3A-3C schematically illustrate three examples of the open-sided outlet channel viewed from the open side.
FIG. 4 demonstrates an example of an outlet section with a Venturi-shaped outlet positioned toward the side of a gear wheel.
FIG. 5 schematically illustrates an example of a shared oil system for providing oil to a plurality of subsystems.
FIG. 6 is a flowchart of a method for generating suction pressure from a moving fluid in a drainage pipe system.
FIG. 7A schematically illustrates a control unit.
FIG. 7B shows an example of a computer program product.
FIG. 8 is a schematic diagram of an exemplary computer system for implementing examples disclosed herein, according to an example.
FIG. 9 schematically illustrates an example of a drainage pipe system comprising a main drainage pipe that transitions into a Venturi-shaped outlet channel.

### DETAILED DESCRIPTION

The detailed description set forth below provides information and examples of the disclosed technology with sufficient detail to enable those skilled in the art to practice the disclosure.

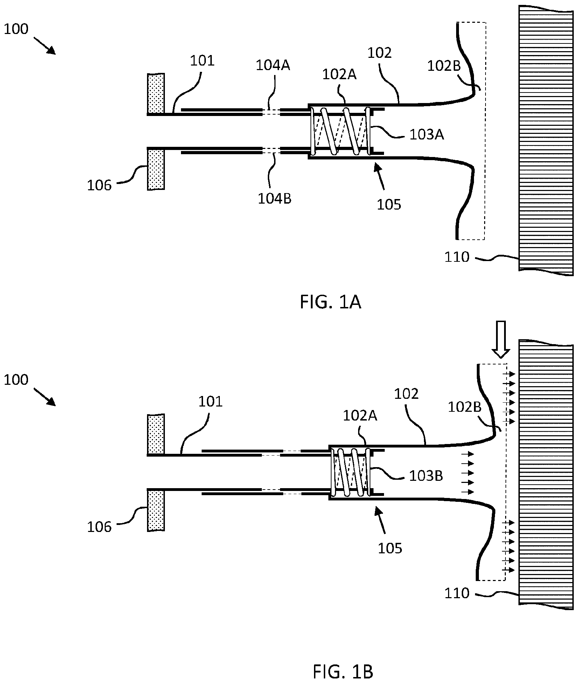

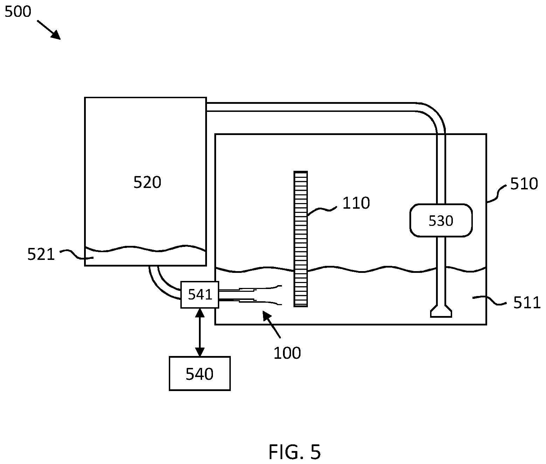

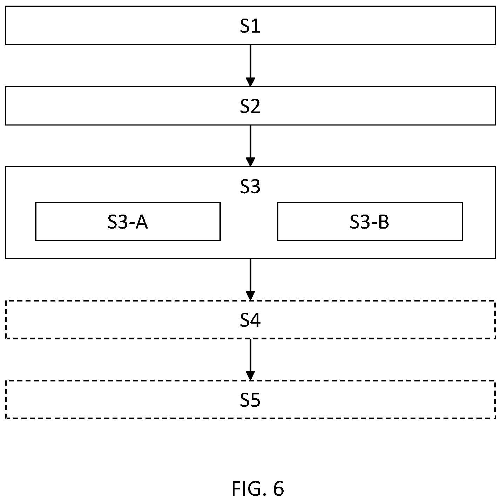

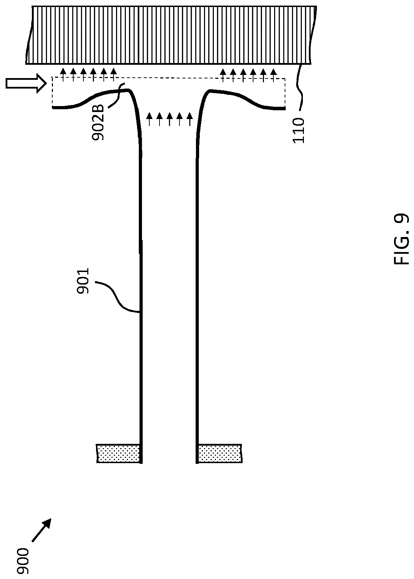

FIGS. 1-4 illustrate a first aspect of the disclosure relating to a drainage pipe system, FIG. 5 illustrates a second aspect of the disclosure relating to a shared oil system, and FIG. 6 illustrate a third aspect of the disclosure relating to a method for generating suction pressure in a drainage pipe system. FIG. 9 illustrate a fourth aspect of the disclosure relating to a drainage pipe system.

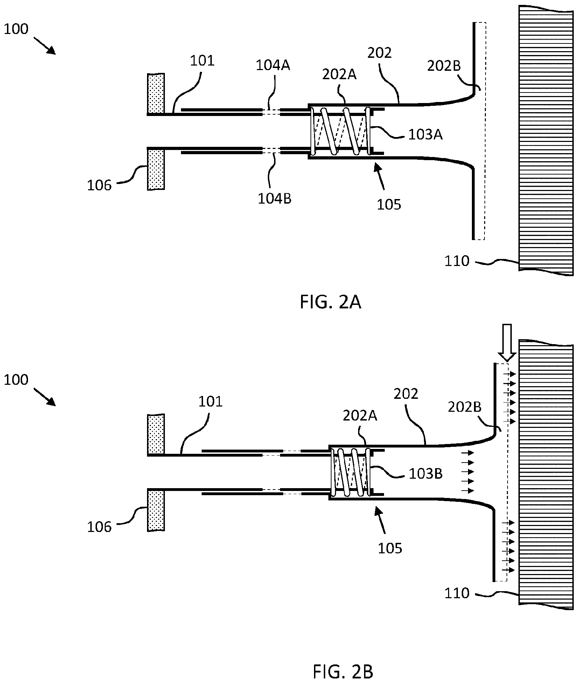

FIGS. 1A and 1B illustrate an example of a drainage pipe system 100 with a Venturi-shaped outlet channel in a retracted and extended position, respectively. Similarly, FIGS. 2A and 2B depict the same drainage pipe system 100, now featuring a flat plate outlet channel, also shown in retracted and extended positions, respectively. The drainage pipe system 100 comprises a main drainage pipe 101. The purpose of the main drainage pipe 101 is to facilitate drainage of fluids. Therefore, during operation, the inlet of the main drainage pipe 101 should be positioned to effectively access the fluid to be drained. A supporting bracket 106 may be used to secure the main drainage pipe in a specified orientation.

The drainage pipe system 100 is further equipped with an outlet section 102, 202 comprising an extension pipe 102A, 202A that transitions into an open-sided outlet channel 102B, 202B. The extension pipe 102A is sized to fit either internally or externally with respect to the main drainage pipe 101, thereby enabling the outlet section 102, 202 to extend and retract along the main drainage pipe's surface. The open-sided outlet channel 102B, 202B is configured to be positioned with its open side facing an external mating surface 110, thereby the open-sided outlet channel creates a defined channel when facing the external mating surface 110. The outlet channel includes a channel inlet and a channel outlet, with an additional inlet at the point where the main drainage pipe 101 terminates inside the channel. Consequently, the outlet channel can be viewed as a T-junction, with the main drainage pipe 101 acting as the branch.

The drainage pipe system 100 is configured to operate with a moving fluid, driven by external forces, e.g., a natural flow of water or oil circulated by a rotating gear wheel. In some applications, the mating surface 110 itself may be in motion, generating the fluid flow. For example, the side of a rotating gear wheel can serve as a mating surface 110. The drainage pipe system 100 is designed to utilize this moving fluid to passively generate suction pressure. When the moving fluid directed through the open-sided outlet channel 102B, a low pressure zone is created inside the channel, i.e., suction pressure is generated. The suction pressure exerts a force that extends the outlet section further toward the external mating surface 110. This, in turn, increases the velocity of the fluid moving through the open-sided outlet channel 102B, further increasing the suction pressure inside the channel 102B, 202B. In the example of FIGS. 1A and 1B, the open-sided outlet channel is Venturi-shaped, i.e., designed with a constricted middle section that narrows before widening again. An advantage of this design is that it accelerates the fluid velocity within the narrowest part of the open-sided outlet channel, thereby further increasing the suction pressure. In the example of FIGS. 2A and 2B, the open-sided outlet channel is either a flat plate or rectangular in shape. This may not generate the suction pressure of a Venturi-shaped outlet channel, but it simplifies the production of the outlet section and reduces material usage. This design may therefore be preferable if the fluid velocity is sufficiently high and there is no need for a Venturi-shaped channel to create increased suction pressure.

In some examples, the main drainage pipe 101 may comprise a stop 105 to prevent the outlet section 102, 202 from detaching from the main drainage pipe 101. This also reduces the risk of overextension or damage to the drainage pipe system 100. The main drainage pipe 101 and/or the outlet section 102, 202 may further include a rotation lock that prevents the outlet section from rotating relative to the main drainage pipe 101. Should rotation be necessary, the locking mechanism can typically be disengaged, allowing the outlet section to be adjusted and subsequently secured in a specified orientation relative to the main drainage pipe 101.

The drainage pipe system 100 may also comprise an extension-retraction mechanism 103A, 103B configured to extend the outlet section 102, 202 along the main drainage pipe's surface as suction pressure increases, and to retract the outlet section 102, 202 to a fully retracted position as the suction pressure ceases. The extension-retraction mechanism may comprise a spring-loaded mechanism, ensuring quick and automatic retraction of the outlet section without needing additional energy input. The examples of FIGS. 1A, 1B, 2A, and 2B illustrate an uncompressed spring 103A when no suction pressure is applied, and a compressed spring 103B when suction pressure is applied. However, an alternative implementation using a spring that extends in response to such pressure is also possible. An advantage of using the extension-retraction mechanism 103A, 103B is that it automatically retracts the outlet section to a default position when the suction pressure ceases, thereby improving the flow through the main drainage pipe by increasing the space between the outlet section and the mating surface.

The main drainage pipe 101 and the extension pipe 102A, 202A may include one or more openings 104A, 104B that align as the outlet section 102, 202 is fully retracted, as seen in FIGS. 1A and 2A, and close as the outlet section extends, as seen in FIGS. 1B and 2B. The aligned openings then contribute to better drainage by allowing fluid to pass through them when the outlet section is retracted.

In some examples, the extension-retraction mechanism 103A, 103B may also include an actuator, which may be electric, hydraulic, or pneumatic, to control extension and retraction of the outlet section 102, 202. A control unit may be connected to the actuator to control the distance between the open-sided outlet channel 102B, 202B and the external mating surface 110, thereby enabling control of the flow through the channel 102B, 202B and, consequently, control of the suction pressure inside the channel 102B, 202B.

In some examples, the extension-retraction mechanism 103A, 103B may be implemented using permanent magnets or electromagnets to control the extension and retraction of the outlet section 102, 202. This may have the advantage of reduced maintenance demands, as magnetic systems have fewer moving parts that can degrade or fail.

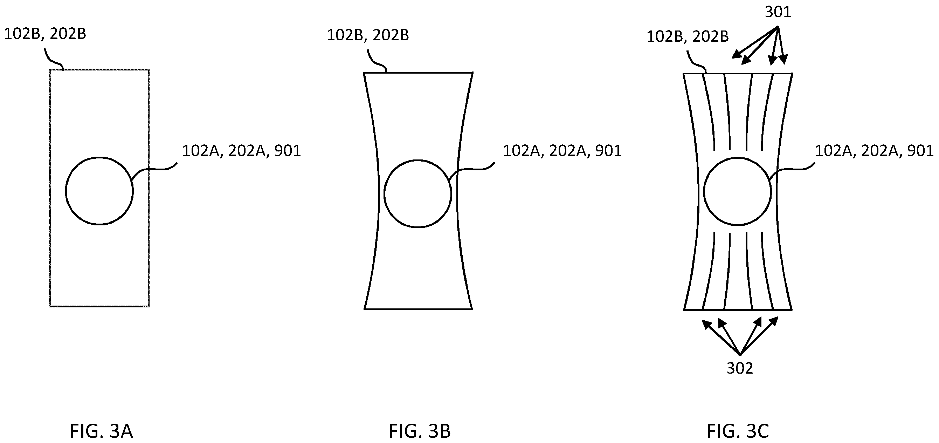

FIGS. 3A, 3B, and 3C offer a view of the open side of the open-sided outlet channel 102B, 202B, and the outlet of the extension pipe 102A, 202A. FIG. 3A illustrates a rectangularly shaped open-sided outlet channel having straight side walls. FIG. 3B illustrates Venturi-shaped side walls, i.e., side walls that narrow in the middle and then widen again, forming a constricted passage that accelerates fluid velocity within the channel. FIG. 3C depicts an open-sided outlet channel that includes at least one of the following: inner walls 301 at the channel inlet configured to concentrate the incoming flow, and inner walls 302 at the channel outlet configured to diffuse the outgoing flow. Likewise, this configuration enhances suction pressure by accelerating the fluid velocity within the channel 102B, 202B.

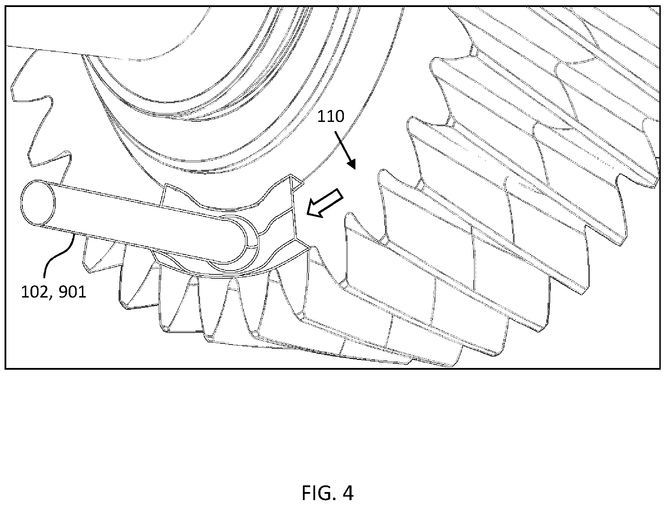

FIG. 4 illustrates an example of an outlet section 102 featuring a Venturi-shaped open-sided outlet channel positioned adjacent to the side of a gear wheel. In this example, the side of the gear wheel corresponds to the external mating surface 110, and the rotation of the gear wheel generates a flow of fluid, typically oil, through the open-sided outlet channel.

FIG. 5 illustrates a second aspect of the disclosure relating to a shared oil system 500. The shared oil system 500 is configured to provide oil to a plurality of subsystems for lubrication and cooling. The shared oil system 500 comprises a first subsystem 510 comprising an oil sump 511 and a second subsystem 520 configured to receive oil from the oil sump 511 of the first subsystem 510. Typically, an oil pump 530 may be configured to draw oil from the oil sump 511 of the first subsystem 510 and deliver the oil to the second subsystem 520. A drainage pipe system 100, according to any of the examples of the first aspect described above, is configured to drain oil from the second subsystem 520 and return to the oil sump 511 of the first subsystem 510. The main drainage pipe 101 of the drainage pipe system 100 connects the second subsystem 520 to the first subsystem 510, and the external mating surface 110 is a gear wheel of the first subsystem 510. The outlet section 102, 202 of the drainage pipe system 100 is positioned toward the gear wheel such that the oil flow generated by the gear wheel's rotation is directed through the open-sided outlet channel 102B, 202B. The second subsystem 520 may include its own oil sump 521. The drainage pipe system 100 prevents the oil level in the second subsystem's oil sump 521 from rising excessively by ensuring drainage even when the system is inclined. Without the drainage pipe system 100, the flow in the main drainage pipe could reverse due to gravity, causing the oil level in the second subsystem's oil sump 521 to rise. Thus, an advantage of using a shared oil system 500 with this configuration is improved oil drainage on inclined surfaces, as the drainage pipe system 100 utilizes the oil flow generated by the gear wheel's rotation to create suction pressure, making it less affected by the system's inclination.

The shared oil system 500 may include an actuator 541 to control the extension and retraction of the outlet section 102, 202. The actuator 541 may typically be electric, hydraulic, or pneumatic. A control unit 540 may be connected to the actuator to control the distance between the open-sided outlet channel 102B, 202B and the gear wheel 110 of the first subsystem, thereby enabling control of the flow through the channel 102B, 202B and, consequently, control of the suction pressure at the outlet of the main drainage pipe 101.

In one preferred example within an electromobility context, the shared oil system 500 may comprise the transmission and the electric machine subsystems of a vehicle. In this application, the first subsystem may be a transmission of a vehicle, and the second subsystem may be an electric machine of a vehicle. This configuration ensures continuous drainage from the electric machine even when the system is inclined, e.g., by inclined road surfaces, causing the transmission oil sump level 511 to rise relative to the inlet of the main drainage pipe 101.

FIG. 6 illustrates a third aspect of the disclosure relating to a method for draining a fluid through a drainage pipe system 100. The drainage pipe system may be implemented according to any of the examples of the first aspect. The method comprises: positioning S1 a main drainage pipe 101; configuring S2 an outlet section 102, 202; and draining S3 the fluid. It should be noted that any configurations relating to the first aspect of the disclosure are also applicable to the third aspect.

The method comprises positioning S1 the main drainage pipe 101 such that the inlet of the main drainage pipe is positioned to access the fluid to be drained. The method further comprises configuring S2 the outlet section 102, 202 such that the extension pipe 102A, 202A can extend and retract along the surface of the main drainage pipe 101. Configuring S2 may here comprise attaching or mounting the outlet section 102, 202 along the surface of the main drainage pipe 101. Configuring S2 may also involve ensuring that the extension pipe 102A, 202A is able to extend and retract along the surface of the main drainage pipe 101.

The method further comprises draining S3 the fluid by positioning S3-A the open side of the open-sided outlet channel 102B, 202B toward an external mating surface 110 and aligning S3-B the open-sided outlet channel 102B, 202B such that a flow of a moving fluid is directed through the open-sided channel 102B, 202B, thereby creating a low pressure zone inside the channel, i.e., generating suction pressure, which exerts a force that extends the outlet section further toward the external mating surface 110. In some examples, positioning S3-A the open-sided outlet channel 102B, 202B may further comprise controlling the distance between the open-sided outlet channel 102B, 202B and the external mating surface 110, thereby enabling control of the flow through the channel 102B, 202B and, consequently, control of the suction pressure at the outlet of the main drainage pipe 101. Controlling the distance to the external mating surface 110 enables a more accurate management of the suction pressure.

The suction pressure can be further increased if the open-sided outlet channel 102B, 202B is Venturi-shaped, i.e., designed with a constricted middle section that narrows before widening again. An advantage of this design is that it accelerates the fluid velocity within the narrowest part of the open-sided outlet channel, thereby further increasing the suction pressure. Accelerates fluid velocity within the open-sided outlet channel can also be achieved by using inner walls 301 at the channel inlet configured to concentrate the incoming flow, and inner walls 302 at the channel outlet configured to diffuse the outgoing flow.

In some examples, the drainage pipe system 100 may further comprise an extension-retraction mechanism 103A, 103B, and the method further comprises retracting S4 the outlet section 102, 202 to a fully retracted position when the suction pressure ceases. This provides the ability to adjust the outlet section dynamically based on suction pressure. In some examples, the main drainage pipe 101 and the extension pipe 102A may include one or more openings 104A, 104B that align as the outlet section 102, 202 is fully retracted. The method may then further comprise draining S5 fluid from the main drainage pipe 101 through the aligned openings 104A, 104B of the main drainage pipe 101 and the extension pipe 102A. This step may also improve flow through the main drainage pipe when suction pressure ceases by increasing the space between the outlet section and the mating surface.

FIG. 9 illustrates a fourth aspect of the disclosure relating to a drainage pipe system 900. The drainage pipe system 900 comprises a main drainage pipe 901 that transitions into an open-sided outlet channel 902B, wherein the open-sided outlet channel is configured to be positioned with its open side facing an external mating surface 110, thereby generating suction pressure inside the main drainage pipe 901 as the moving fluid is directed through the outlet channel 902B. It should be noted that configurations from the first aspect of the disclosure may also be applicable to this fourth aspect. The primary difference is that the open-sided outlet channel is integrated directly into the main drainage pipe 901, eliminating the need for a separate outlet section. The open-sided outlet channel 902B may incorporate the same design principles as the outlet channels 102B, 202B from the first aspect of the disclosure. Preferably, the open-sided outlet channel has a Venturi shape, i.e., designed with a constricted middle section that narrows before widening again, as a Venturi-shaped outlet channel enhances fluid velocity at its narrowest point, thereby increasing suction pressure.

In the following, some other considerations relating to the first, second, third and fourth aspects of the disclosure will be discussed.

The return of the electric machine (EM) oil flow to the transmission oil sump should be placed in the bottom of the EM to allow for proper drainage of the EM. However, this placement of the return outlets is so low that the return channels become exposed to movement of the oil sump level when the road inclination changes. Driving in steep inclinations, the transmission oil sump could thereby partially submerge the EM rotors, which could induce unacceptable losses and generate excessive heat.

The return pipe from the electric machines is flowing into an outlet pipe. The outlet pipe has an exit that is mating with the side of a gear wheel, e.g., on the countershaft, and the exit is shaped like a Venturi channel in the direction of the gear wheel rotation. The Venturi channel enforces a suction pressure on the outlet when the gear wheel is rotating, which drains the electric machines. A spring-loaded mechanism between the outlet pipe and the return pipe forces the outlet pipe to move away from the gear wheel when it is not rotating, which allows for a sufficient opening area of the drainage in conditions when the gear selection is such that the countershaft does not rotate.

The Venturi shape follows the direction of rotation of the gear wheel, so that oil in the sump being moved by the gear wheel flows into the Venturi shape at a large gap between the Venturi and the gear wheel side, then accelerates to a low-pressure zone with a small gap between the Venturi and the gear wheel side. The outlet pipe exits perpendicular to the low-pressure zone, so that the low pressure can suck oil from the electric machines and drain them. The Venturi has flanks on the side to amplify its effect.

When the gear wheel is rotating, the suction in the Venturi channel pulls the outlet pipe towards the gear wheel side, compressing the spring a little but amplifying the suction more, which pulls the outlet pipe even closer until a well-defined end point is reached. When the gear wheel is not rotating, the spring pushes the outlet pipe back, increasing the outlet area for the return flow from the electric machines and letting the outlet pipe work as a normal return pipe. It is possible to add extra opening holes in the return pipe and the outlet pipe that align only when the spring is unloaded, further increasing the opening area if necessary.

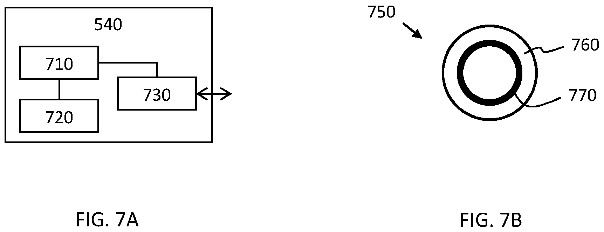

FIG. 7A schematically illustrates, in terms of a number of functional units, the components of a control unit 540 according to aspects of the discussions and methods disclosed herein. This control unit 540 may typically be comprised in a vehicle. Processing circuitry 710 is provided using any combination of one or more of a suitable central processing unit CPU, multiprocessor, microcontroller, digital signal processor DSP, etc., capable of executing software instructions stored in a computer program product, e.g., in the form of a storage medium 720. The processing circuitry 710 may further be provided as at least one application specific integrated circuit ASIC, or field programmable gate array FPGA.

Particularly, the processing circuitry 710 is configured to cause the control unit 540 to perform a set of operations, or steps, such as the methods discussed in connection to FIG. 6. For example, the storage medium 720 may store the set of operations, and the processing circuitry 710 may be configured to retrieve the set of operations from the storage medium 720 to cause the control unit 540 to perform the set of operations. The set of operations may be provided as a set of executable instructions. Thus, the processing circuitry 710 is thereby arranged to execute methods as herein disclosed.

The storage medium 720 may also comprise persistent storage, which, for example, can be any single one or combination of magnetic memory, optical memory, solid state memory or even remotely mounted memory.

The control unit 540 may further comprise an interface 730 for communications with at least one external system, such as an actuator 541 controlling the extension-retraction mechanism of the drainage pipe system 100. As such the interface 730 may comprise one or more transmitters and receivers, comprising analogue and digital components and a suitable number of ports for wireline or wireless communication.

The processing circuitry 710 controls the general operation of the control unit 540, e.g., by sending data and control signals to the interface 730 and the storage medium 720, by receiving data and reports from the interface 730, and by retrieving data and instructions from the storage medium 720. Other components, as well as the related functionality, of the control node are omitted in order not to obscure the concepts presented herein.

FIG. 7B shows an example of a computer program product. A computer readable medium 760 carrying a computer program 770 comprising program code means for performing the steps of aforementioned method when said program product is run on a computer or on processing circuitry 710 of a control unit 540.

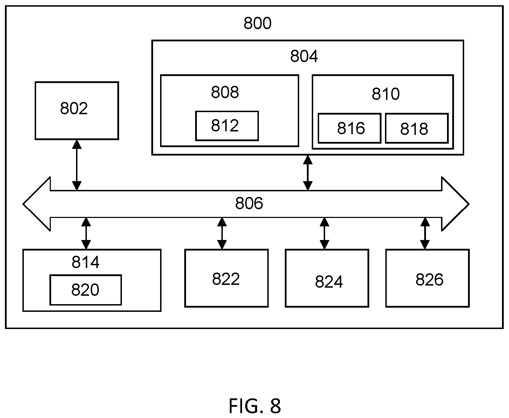

FIG. 8 is a schematic diagram of a computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device
interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A drainage pipe system 100 for generating suction pressure from a moving fluid, the drainage pipe system 100 comprising: a main drainage pipe 101; and an outlet section 102, 202 comprising an extension pipe that transitions into an open-sided outlet channel 102B, 202B, wherein the extension pipe 102A, 202A is sized to fit either internally or externally with respect to the main drainage pipe 101, thereby enabling the outlet section 102, 202 to extend and retract along the main drainage pipe's surface, and wherein the open-sided outlet channel is configured to be positioned with its open side facing an external mating surface 110, thereby generating suction pressure at the outlet of the main drainage pipe 101 as the moving fluid is directed through the outlet channel 102B, 202B.

Example 2: The drainage pipe system 100 of example 1, wherein the drainage pipe system 100 further comprises an extension-retraction mechanism 103A, 103B configured to extend the outlet section 102, 202 along the main drainage pipe's surface as suction pressure increases, and to retract the outlet section 102, 202 to a fully retracted position as the suction pressure ceases.

Example 3: The drainage pipe system of any of examples 1-2, wherein the main drainage pipe 101 and the extension pipe 102A include one or more openings 104A, 104B that align as the outlet section 102, 202 is fully retracted and close as the outlet section 102, 202 extends.

Example 4: The drainage pipe system of any of examples 1-3, wherein the main drainage pipe comprises a stop to prevent the outlet section 102, 202 from detaching from the main drainage pipe 101.

Example 5: The drainage pipe system of any of examples 1-4, wherein the open-sided outlet channel is Venturi-shaped.

Example 6: The drainage pipe system of any of examples 1-5, wherein the open-sided outlet channel comprises at least one of: inner walls at the channel inlet configured to concentrate the incoming flow; and inner walls at the channel outlet configured to diffuse the outgoing flow.

Example 7: The drainage pipe system of any of examples 1-6, wherein the extension-retraction mechanism 103A, 103B comprises a spring-loaded mechanism configured to retract the outlet section 102, 202 back to fully retracted position as suction pressure ceases.

Example 8: The drainage pipe system of any of examples 1-6, wherein the extension-retraction mechanism 103A, 103B comprises permanent magnets or electromagnets to control the extension and retraction of the outlet section 102, 202.

Example 9: The drainage pipe system of any of examples 1-8, wherein the extension-retraction mechanism 103A, 103B further comprises an actuator 541, which may be electric, hydraulic, or pneumatic, to control the extension and retraction of the outlet section 102, 202.

Example 10: The drainage pipe system of any of examples 2-9, wherein the extension-retraction mechanism is configured to control the distance between the open-sided outlet channel 102B, 202B and the external mating surface 110, thereby enabling control of the flow through the channel 102B, 202B and, consequently, control of the suction pressure at the outlet of the main drainage pipe 101.

Example 11: A shared oil system 500 for providing oil to a plurality subsystems 510, 520 for lubrication and cooling, wherein the shared oil system 500 comprises: a first subsystem 510 comprising an oil sump 511; a second subsystem 520 configured to receive oil from the oil sump 511 of the first subsystem 510; an oil pump 530 configured to draw oil from the oil sump 511 of the first subsystem 510 and deliver the oil to the second subsystem; and a drainage pipe system 100 according to any of examples 1-10, configured to drain oil from the second subsystem 520 and return to the oil sump 511 of the first subsystem 510, wherein the main drainage pipe 101 connects the second subsystem 520 to the first subsystem 510; and the mating surface 110 is a gear wheel of the first subsystem, such that the oil flow generated by the gear wheel's rotation is directed through the channel 102B, 202B of the drainage pipe system 100.

Example 12: The shared oil system 300 of example 11, wherein the first subsystem 510 is a transmission system of a vehicle and the second subsystem 520 is an electric machine of a vehicle.

Example 12B: The shared oil system 300 of any of examples 11-12, wherein the drainage pipe system comprises: an extension-retraction mechanism 103A, 103B; an actuator 541 configured to control extension and retraction of the outlet section 102, 202, and a control unit 540 configured to control the distance between the open-sided outlet channel 102B, 202B and the external mating surface 110, thereby enabling control of the flow through the channel 102B, 202B and, consequently, control of the suction pressure at the outlet of the main drainage pipe 101.

Example 13: A method for generating suction pressure in a drainage pipe system 100 from a moving fluid, wherein the drainage pipe system comprises a main drainage pipe 101 and an outlet section 102, 202 comprising an extension pipe that transitions into an open-sided outlet channel 102B, 202B, and wherein the extension pipe 102A, 202A is sized to fit either internally or externally with respect to the main drainage pipe 101, the method comprising: positioning S1 the main drainage pipe 101 such that the inlet of the main drainage pipe is positioned to access the fluid to be drained; configuring S2 the outlet section 102, 202 such that the extension pipe 102A, 202A can extend and retract along the surface of the main drainage pipe 101; draining S3 the fluid by positioning S3-A the open side of the open-sided outlet channel 102B, 202B toward an external mating surface 110 and aligning S3-B the open-sided outlet channel 102B, 202B such that a flow of a moving fluid is directed through the channel 102B, 202B, thereby creating suction pressure generated by the flow inside the channel.

Example 14: The method of example 13, wherein the open-sided outlet channel is Venturi-shaped.

Example 15: The method of any of examples 13-14, wherein the open-sided outlet channel comprises at least one of: inner walls 301 at the channel inlet configured to concentrate the incoming flow; and inner walls 302 at the channel outlet configured to diffuse the outgoing flow.

Example 16: The method of any of examples 13-15, wherein the drainage pipe system 100 further comprises an extension-retraction mechanism 103A, 103B, and wherein the method further comprises: retracting S4 the outlet section 102, 202 to a fully retracted position when the suction pressure ceases.

Example 17: The method of example 16, wherein the main drainage pipe 101 and the extension pipe 102A include one or more openings 104A, 104B that align as the outlet section 102, 202 is fully retracted, and wherein the method further comprises: draining S5 the fluid through the aligned openings 104A, 104B of the main drainage pipe 101 and the extension pipe 102A.

Example 18: The method of any of examples 15-17, wherein positioning S3-A further comprises controlling the distance between the open-sided outlet channel 102B, 202B and the external mating surface 110, thereby enabling control of the flow through the channel 102B, 202B and, consequently, control of the suction pressure.

Example 19: A computer program product comprising program code for performing, when executed by the processing circuitry, the method of example 18.

Example 20: A non-transitory computer-readable storage medium comprising instructions, which when executed by the processing circuitry, cause the processing circuitry to perform the method of example 18.

Example 21: A drainage pipe system 900 for generating suction pressure from a moving fluid, the drainage pipe system 900 comprising a main drainage pipe 901 that transitions into an open-sided outlet channel 902B, wherein the open-sided outlet channel is configured to be positioned with its open side facing an external mating surface 110, thereby generating suction pressure at the outlet of the main drainage pipe 901 as the moving fluid is directed through the outlet channel 102B, 202B.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A drainage pipe system (100) for generating suction pressure from a moving fluid, the drainage pipe system (100) comprising:
a main drainage pipe (101); and
an outlet section (102, 202) comprising an extension pipe that transitions into an open-sided outlet channel (102B, 202B), wherein the extension pipe (102A, 202A) is sized to fit either internally or externally with respect to the main drainage pipe (101), thereby enabling the outlet section (102, 202) to extend and retract along the main drainage pipe's surface, and wherein the open-sided outlet channel is configured to be positioned with its open side facing an external mating surface (110), thereby generating suction pressure at the outlet of the main drainage pipe (101) as the moving fluid is directed through the outlet channel (102B, 202B).

2. The drainage pipe system (100) of claim 1, wherein the drainage pipe system (100) further comprises an extension-retraction mechanism (103A, 103B) configured to extend the outlet section (102, 202) along the main drainage pipe's surface as suction pressure increases, and to retract the outlet section (102, 202) to a fully retracted position as the suction pressure ceases.

3. The drainage pipe system of any of claims 1-2, wherein the main drainage pipe (101) and the extension pipe (102A) include one or more openings (104A, 104B) that align as the outlet section (102, 202) is fully retracted and close as the outlet section (102, 202) extends.

4. The drainage pipe system of any of claims 1-3, wherein the main drainage pipe comprises a stop to prevent the outlet section (102, 202) from detaching from the main drainage pipe (101).

5. The drainage pipe system of any of claims 1-4, wherein the open-sided outlet channel is Venturi-shaped.

6. The drainage pipe system of any of claims 1-5, wherein the open-sided outlet channel comprises at least one of inner walls at the channel inlet configured to concentrate the incoming flow; and inner walls at the channel outlet configured to diffuse the outgoing flow.

7. The drainage pipe system of any of claims 1-6, wherein the extension-retraction mechanism (103A, 103B) comprises a spring-loaded mechanism configured to retract the outlet section (102, 202) back to fully retracted position as suction pressure ceases.

8. A shared oil system (500) for providing oil to a plurality of subsystems (510, 520) for lubrication and cooling, wherein the shared oil system (500) comprises:
a first subsystem (510) comprising an oil sump (511);
a second subsystem (520) configured to receive oil from the oil sump (511) of the first subsystem (510);
an oil pump (530) configured to draw oil from the oil sump (511) of the first subsystem (510) and deliver the oil to the second subsystem; and
a drainage pipe system (100) according to any of claims 1-7, configured to drain oil from the second subsystem (520) and return to the oil sump (511) of the first subsystem (510), wherein the main drainage pipe (101) connects the second subsystem (520) to the first subsystem (510), the mating surface (110) is a gear wheel of the first subsystem, and the oil flow generated by the gear wheel's rotation is directed through the open-sided outlet channel (102B, 202B), thereby generating suction pressure at the outlet of the main drainage pipe (101).

9. The shared oil system (300) of claim 8, wherein the first subsystem (510) is a transmission system of a vehicle, and the second subsystem (520) is an electric machine of a vehicle.

10. A method for generating suction pressure in a drainage pipe system (100) from a moving fluid, wherein the drainage pipe system comprises a main drainage pipe (101) and an outlet section (102, 202) comprising an extension pipe that transitions into an open-sided outlet channel (102B, 202B), and wherein the extension pipe (102A, 202A) is sized to fit either internally or externally with respect to the main drainage pipe (101), the method comprising:
positioning (S1) the main drainage pipe (101) such that the inlet of the main drainage pipe is positioned to access a fluid to be drained;
configuring (S2) the outlet section (102, 202) such that the extension pipe (102A, 202A) can extend and retract along the surface of the main drainage pipe (101);
draining (S3) the fluid by positioning (S3-A) the open side of the open-sided outlet channel (102B, 202B) toward an external mating surface (110) and aligning (S3-B) the open-sided outlet channel (102B, 202B) such that a flow of a moving fluid is directed through the channel (102B, 202B), thereby creating suction pressure generated by the flow inside the channel.

11. The method of claim 10, wherein the open-sided outlet channel is Venturi-shaped.

12. The method of any of claims 10-11, wherein the open-sided outlet channel comprises at least one of inner walls (301) at the channel inlet configured to concentrate the incoming flow; and inner walls (302) at the channel outlet configured to diffuse the outgoing flow.

13. The method of any of claims 10-12, wherein the drainage pipe system (100) further comprises an extension-retraction mechanism (103A, 103B), and wherein the method further comprises: retracting (S4) the outlet section (102, 202) to a fully retracted position when the suction pressure ceases.

14. The method of claim 13, wherein the main drainage pipe (101) and the extension pipe (102A) include one or more openings (104A, 104B) that align as the outlet section (102, 202) is fully retracted, and wherein the method further comprises: draining (S5) the fluid through the aligned openings (104A, 104B) of the main drainage pipe (101) and the extension pipe (102A).

15. The method of any of claims 10-14, wherein positioning (S3-A) further comprises controlling the distance between the open-sided outlet channel (102B, 202B) and the external mating surface (110), thereby enabling control of the flow through the channel (102B, 202B) and, consequently, control of the suction pressure.
